# EUROPEAN PATENT APPLICATION

(11) **EP 2 664 726 A1**
(43) Date of publication of application: **20.11.2013**
(21) Application number: 12734182.4
(22) Date of filing: 11.01.2012
(51) Int. Cl.: E04D 13/18, H01L 31/042

(54) **SOLAR CELL MODULE AND SOLAR POWER GENERATING DEVICE**

(30) Priority: 12.01.2011 JP 2011004262
(71) Applicant: Sanyo Electric Co., Ltd., Osaka 570-8677 (JP)
(72) Inventor: NAKAJIMA Takeharu, Moriguchi-shi Osaka 570-8677 (JP); HIGUCHI Minoru, Moriguchi-shi Osaka 570-8677 (JP); ARAI Yutaka, Moriguchi-shi Osaka 570-8677 (JP)
(74) Representative: Glawe, Delfs, Moll
(86) International application number: PCT/JP2012/050356
(87) International publication number: WO 2012/096298

(57) **Abstract**

The present invention provides a device whereby, without causing an increase in the number of components, it is possible to perform an installation task without resting on a solar cell module when working. The present invention has: a horizontal crosspiece (6), wherein a frame attachment section (62) is formed; a rectangular solar cell panel (1); and a solar cell module (10) provided with an top side frame (4), which is attached to the top side of the solar cell panel (1) and has an upper flange (41) carried on the upper surface of the frame attachment section (62), and a bottom side frame (3), which is attached to the bottom side of the solar cell panel (1) and has an upper and lower flange (31, 34) that extend towards eaves. A pair of the horizontal crosspieces (6, 6) are installed on a roof at a predetermined spacing, the upper flange (41) of the top side frame (4) of the solar cell module (10) disposed on the eaves side is placed on the upper surface (66) of the attachment section (62), and the upper flange (41) of the top side frame (4) is affixed sandwiched against the attachment section (62) by the upper and lower flanges (31, 34) of the bottom side frame (3) of the solar cell module (10) on the roof ridge side.

## Description

### FIELD OF THE INVENTION

The present invention relates to a solar cell module whose frame is mounted around a module unit for producing photovoltaic power, and to a photovoltaic power generator in which these solar cell modules are arranged side by side on the roof of a building.

### BACKGROUND ART

In a photovoltaic power generator installed on the roof of a building, a frame made of steel or aluminum is mounted on the roof, and a plurality of solar cell modules are attached to this frame.

Many methods have been proposed for mounting solar cell modules on a roof. In Patent Document 1, a photovoltaic power generator has been proposed in which solar cell modules can be easily installed on a roof without stepping on the solar cell modules.

The photovoltaic power generator described in Patent Document 1 will now be explained with reference to FIG. 43.

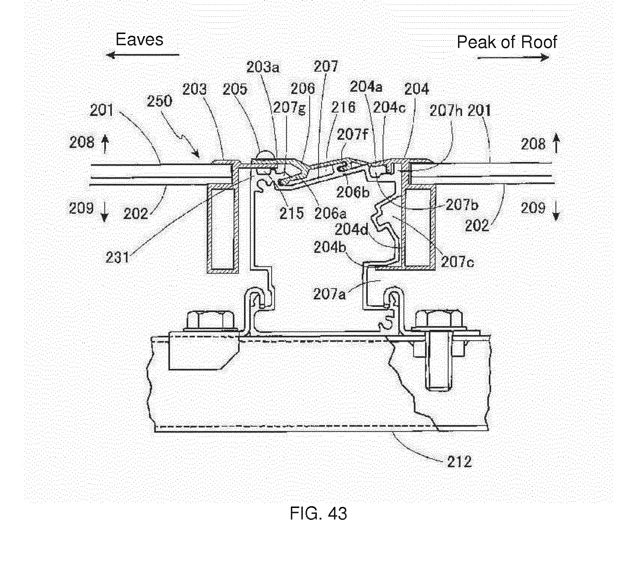

As shown in FIG. 43, the cover member 203 facing the eaves and the cover member 204 facing the ridge for the solar cell module 250 have different shapes. The cover member 203 facing the eaves supports the solar cell panel 201 and has an upper flange 203a provided on the light-receiving side 208. The cover member 204 facing the ridge supports the solar cell panel 201 and has an upper flange 204a provided on the light-receiving side 208 and a lower flange 204b provided on the non-light-receiving side 209 of the solar cell module.

The cross-sectional structure of the horizontal rack 207 serving as the frame has a receiving portion 231 facing the eaves for receiving the upper flange 203a of the cover member 203. It also has a recessed portion 207b facing the ridge in which the upper flange 204a and a protruding portion 204c of the cover member 204 are fitted. In addition, it has a protruding portion 207h capable of supporting the base portion of the upper flange 204a of the cover member 204. The horizontal rack 207 also has a recessed portion 207a for accommodating the lower flange 204b of the cover member 204. The recessed portions 207a, 207b form a protruding portion 207c of the base portion.

Protruding portions 207f, 207g are also provided on the upper surface of the horizontal rack 207, which have a structure into which the protruding portions 206a, 206b of a clamping member 206 can be fitted.

A space 215 is provided in the upper surface of the horizontal rack 207 for a screw 205 to pass through.

The following is a brief explanation of the method used to mount a solar cell module 250 with this structure on a horizontal rack 207. A U-shaped space is formed by the upper flange 204a, the lower flange 204b and a vertical wall portion 204d of the cover member 204 of the solar cell module 250 facing the eaves. A portion of the upper surface of the horizontal rack 207 facing the ridge (the upper surface protruding portion 207h facing the ridge) is inserted into this space and comes into contact with the inner walls of the space. By tilting the side of the solar cell module 250 facing the surface of the roof around a center line passing through the points of contact, the tip portion of the upper flange 204a can be directed into the recessed portion 207b of the horizontal rack 207, and the tip portion of the upper flange 204a can be rotated around the center line to move the solar cell module 250 closer to the roof surface 212.

The tip portion of the protruding portion 204c provided in the middle of the upper flange 204a then comes into contact with the groove portion 207b in the upper surface of the horizontal rack 207 facing the ridge, the tip portion of the protruding portion 204c is rotated around the center line, and the solar cell module 250 is rotated.

After the tip portion of the protruding portion 204c in the middle of the upper flange 204a of the cover portion 204 facing the eaves begins to rotate, the solar cell module 250 is fitted into the horizontal rack 207 so that the tip portion of the lower flange 204b is close to the upper surface of the recessed portion 207a.

The upper flange 203a of the cover member 203 of the solar cell module 250 facing the ridge is then received and secured by the receiving portion 231 of the horizontal rack 7. The protruding portions 206a, 206b of the clamping member 206 are fitted into the protruding portions 207f, 207g on the upper surface portion of the horizontal rack 207, and the clamping member 206 and the cover member 203 facing the ridge are secured using a screw 205. The clamping member 206 and the cover member 203 facing the ridge are secured with the screw 205 until the cover member 204 of the solar cell module 250 facing the eaves has been mounted.

### Prior Art Documents

### Patent Documents

Patent Document 1: Laid-Open Patent Application No. 2007-266446

### SUMMARY OF THE INVENTION

### Problem Solved by the Invention

In this photovoltaic power generator, the clamping member 206 is mounted before the cover member 204 of the solar cell module 250 facing the eaves has been mounted. In order to mount the clamping member 206, the solar cell module 250 has to be straddled, and the installer has to be very skillful in order to install the photovoltaic power generator without stepping on the solar cell modules 250.

In this photovoltaic power generator, the solar cell module 250 is clamped and secured to the horizontal rack 207 serving as the base using a clamping member 206. As a result, a separate clamping member is required in addition to the frame and the solar cell module. This increases the number of parts.

The present invention provides a device which does not increase the number of parts, and which can be installed without the installer stepping on the solar cell module.

### Means of Solving the Problem

The present invention is a solar cell module installed between a pair of cross rails on which a frame mounting portion has been provided. The solar cell module comprises a rectangular solar cell panel, an upper frame having an upper flange mounted on an upper side of the solar cell panel and placed on the upper surface portion of the frame mounting portion, and a lower frame mounted on a lower side of the solar cell panel and having upper and lower flanges extending on the side facing the ridge. The upper flange of the upper frame of the solar cell module arranged on the side facing the eaves is interposed in the mounting portion by the upper and lower flanges.

The present invention is also a photovoltaic power generator installed on the roof of a building which comprises a cross rail having a frame mounting portion, and a solar cell module including: a rectangular solar cell panel; an upper frame having an upper flange, the upper frame being mounted on the upper side of the solar cell panel and placed on the upper surface portion of the frame mounting portion; and a lower frame mounted on a lower side of the solar cell panel and having upper and lower flanges extending on the side facing the ridge. A pair of cross rails is installed on the roof at a predetermined interval, the upper flange of the upper frame is placed on the upper surface portion of the mounted portion, and the upper flange of the upper frame is interposed and secured in the mounted portion by the upper and lower flanges of the lower frame of the solar cell module on the side facing the ridge.

### Effect of the Invention

In the present invention, the frame mounting portion of a cross rail is interposed between upper and lower flanges of a lower frame via the upper flange of the upper frame of the solar cell module positioned on the eaves side of the cross rail in order to secure the upper frame and the lower frame. As a result, the solar cell module is secured strongly against a load caused by the blowing wind.

### BRIEF DESCRIPTION OF THE DRAWINGS

FIG. 1 is a top view showing a solar cell module according to an embodiment of the present invention from the light-receiving side.
FIG. 2 is a rear view showing a solar cell module according to an embodiment of the present invention from the back side.
FIG. 3 is a cross-sectional view showing the lower frame used by a solar cell module according to a first embodiment of the present invention.
FIG. 4 is a cross-sectional view showing the upper frame used by a solar cell module according to a first embodiment of the present invention.
FIG. 5 is a cross-sectional view showing the side frame used by a solar cell module according to an embodiment of the present invention.
FIG. 6 is a cross-sectional view showing a photovoltaic power generator according to a first embodiment of the present invention installed on a roof.
FIG. 7 is a side view showing a photovoltaic power generator according to a first embodiment of the present invention installed on a roof.
FIG. 8 is a cross-sectional view showing a cross rail used by a photovoltaic power generator according to an embodiment of the present invention.
FIG. 9 is an enlarged cross-sectional view showing the frame and cross rail of a solar cell module in a photovoltaic power generator according to a first embodiment of the present invention.
FIG. 10 is an enlarged cross-sectional view showing the frame and cross rail of a solar cell module in a photovoltaic power generator according to a first embodiment of the present invention in which the solar cell module has been lifted up by a load caused by the blowing wind.
FIG. 11 is an enlarged cross-sectional view showing the frame and cross rail of a solar cell module in a photovoltaic power generator according to a first embodiment of the present invention in which the solar cell module has been moved towards the ridge by a load caused by the blowing wind.
FIG. 12 is a perspective view showing a straight bracket mounted on a roof to secure a cross rail used by the present invention.
FIG. 13 is a perspective view showing a cross rail used by the present invention which has been temporarily secured to a straight bracket mounted on a roof.
FIG. 14 is a cross-sectional view showing a cross rail used by the present invention which has been temporarily secured to a straight bracket mounted on a roof.
FIG. 15 is a cross-sectional view showing a cross rail used by the present invention which has been temporarily secured to a straight bracket mounted on a roof.
FIG. 16 is a cross-sectional view showing a cross rail used by the present invention which has been secured to a straight bracket mounted on a roof.
FIG. 17 is a perspective view showing a cross rail used by the present invention which has been positioned using a cross rail gauge and temporarily secured to straight brackets mounted on a roof.
FIG. 18 is a cross-sectional view showing a cross rail used by the present invention which has been positioned using a cross rail gauge and temporarily secured to straight brackets mounted on a roof.
FIG. 19 is a perspective view showing a cross rail used by the present invention which has been secured using a cable clip to a straight bracket mounted on a roof.
FIG. 20 is a perspective view showing a cross rail used by the present invention which has been mounted on a roof.
FIG. 21 is a perspective view showing an eaves-side cover attached to a cross rail used by the present invention which has been mounted on a roof.
FIG. 22 is a perspective view showing a solar cell module mounted on a cross rail used by the present invention which has been mounted on a roof.
FIG. 23 is a cross-sectional view showing a solar cell module mounted on a cross rail used by the present invention which has been mounted on a roof.
FIG. 24 is a cross-sectional view showing a solar cell module mounted on a cross rail used by the present invention which has been mounted on a roof.
FIG. 25 is a perspective view showing a solar cell module mounted on a cross rail used by the present invention which has been mounted on a roof.
FIG. 26 is a perspective view showing a solar cell module mounted on a cross rail used by the present invention which has been mounted on a roof.
FIG. 27 is a perspective view showing a solar cell module mounted on a cross rail used by the present invention which has been mounted on a roof.
FIG. 28 is a cross-sectional view showing a solar cell module mounted on a cross rail used by the present invention which has been mounted on a roof.
FIG. 29 is a cross-sectional view showing a solar cell module mounted on a cross rail used by the present invention which has been mounted on a roof.
FIG. 30 is a perspective view showing a peak-side cover attached to a cross rail used by the present invention which has been mounted on a roof.
FIG. 31 is a perspective view showing a peak-side cover attached to a cross rail used by the present invention which has been mounted on a roof.
FIG. 32 is a perspective view showing a grounding bracket attached to a cross rail used by the present invention which has been mounted on a roof.
FIG. 33 is a perspective view showing a grounding bracket attached to a cross rail used by the present invention which has been mounted on a roof.
FIG. 34 is a front view of a grounding bracket used in the present invention.
FIG. 35 is a top view of a grounding bracket used in the present invention.
FIG. 36 is a cross-sectional view showing a grounding bracket attached to a cross rail used by the present invention which has been mounted on a roof.
FIG. 37 is a perspective view showing a cross rail cover attached to a cross rail used by the present invention which has been mounted on a roof.
FIG. 38 is a perspective view showing a cross rail cover attached to a cross rail used by the present invention which has been mounted on a roof.
FIG. 39 is a cross-sectional view showing a photovoltaic power generator according to a second embodiment of the present invention installed on a roof.
FIG. 40 is an enlarged cross-sectional view showing a frame and cross rail of a solar cell module for a photovoltaic power generator according to a second embodiment of the present invention.
FIG. 41 is an enlarged cross-sectional view showing a frame and cross rail of a solar cell module for a photovoltaic power generator according to a third embodiment of the present invention.
FIG. 42 is an enlarged cross-sectional view showing a frame and cross rail of a solar cell module for a photovoltaic power generator according to a fourth embodiment of the present invention.
FIG. 43 is an enlarged cross-sectional view showing a cover member, horizontal rack, and clamping member of a solar cell module of the prior art.

### DETAILED DESCRIPTION OF THE INVENTION

The following is a detailed explanation of embodiments of the present invention with reference to the drawings. All components that are identical or equivalent in function are denoted by the same reference numbers in the drawings, and the explanation of these components has not been repeated in order to avoid redundancy.

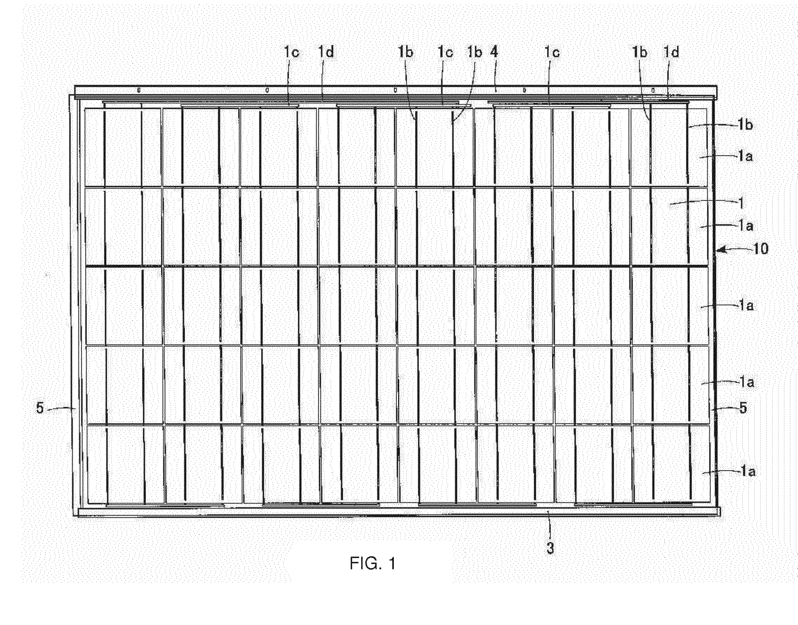

As shown in FIG. 1, the solar cell module 10 of the present invention has a rectangular solar cell panel 1, and frames 3, 4, 5 mounted on the peripheral edges of the solar cell panel 1.

A lower frame 3 is mounted on one long side of the solar cell panel 1. The lower frame 3 is mounted on the side of the roof facing the eaves. An upper frame 4 is mounted on the other long side of the solar cell panel 1. The upper frame 4 is mounted on the side of the roof facing the ridge. Side frames 5 are provided on the short sides of the solar cell panel 1.

The lower frame 3, the upper frame 4 and the side frames 5 are connected to each other at their end points in the longitudinal direction. These frames 3, 4, 5 protect the solar cell panel 1. The solar cell module 1 is mounted on installation cross rails 6 as described below. The length of the side frames 5 is approximately 800 mm, and the length of the lower frame 3 and the upper frame 4 is from 1500 mm to 1600 mm. However, the present invention is not limited to this example, and the frames can be of any size.

The shape of the solar cell panel 1 is rectangular when viewed from above. As shown in FIG. 1, the solar cell panel 1 has a plurality of solar cells 1a connected to each other electrically via wiring material 1b, and sealed between a transparent surface member and weather-resistant backing member using a transparent sealing material with superior weather- and moisture-resistance such as EVA (ethylene vinyl acetate copolymer resin).

The solar cells 1a are connected in series using wiring material 1b to form a string which functions as a single unit. Connection wiring such as transition wiring 1c is used to connect the strings. A lead wire 1d is also connected to draw power from the solar cells 1a.

The solar cells 1a are 100-mm square crystalline semiconductors with a thickness of 0.15 mm made of single-crystal silicon or polycrystalline silicon. The present invention is not limited to this example. Other types of solar cells can be used.

Each solar cell 1a can have an n-type region and a p-type region, and a junction portion forming an electric field for separating carriers in the boundary portion between the n-type region and the p-type region. The solar cells 1a may be back junction-type solar cells with the n-type region and p-type region on the back side.

The surface member is a transparent panel allowing light to pass into the solar cell 1a. Examples include glass panels such as white glass, tempered glass and heat-reflecting glass, and panels made of synthetic resins such as polycarbonate resin.

The backing member may be made of polyvinyl fluoride (PVF), polyethylene terephthalate (PET), polyethylene naphthalate (PEN), a laminate thereof, or aluminum foil sandwiched between sheets of PET film.

The solar cell module 10 is fitted between the frames 3, 4, 5 using insulating packing or a silicone resin on the edges of the solar cell panel 1.

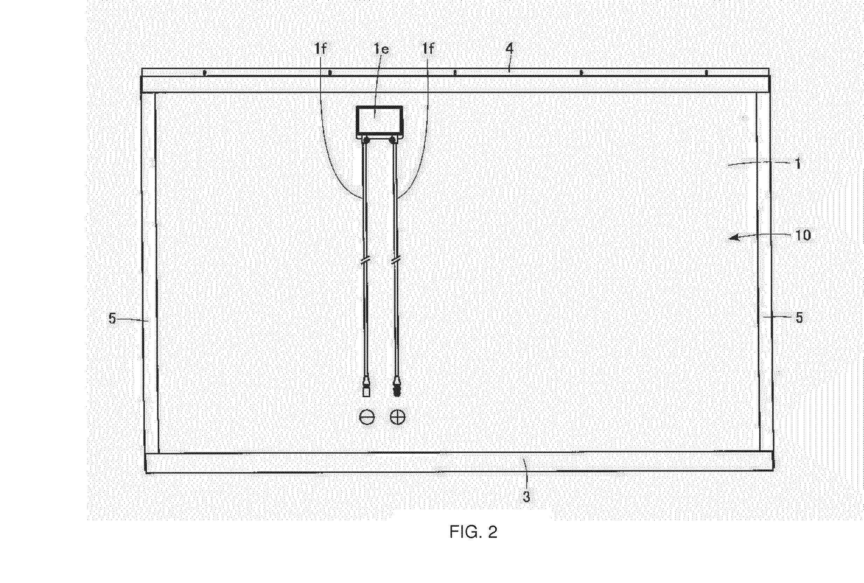

Also, as shown in FIG. 2, a terminal box 1e is mounted on the back side of the solar cell module 10, and power generated by the solar cell panel 1 is supplied from the terminal box 1e to cables 1f, 1f.

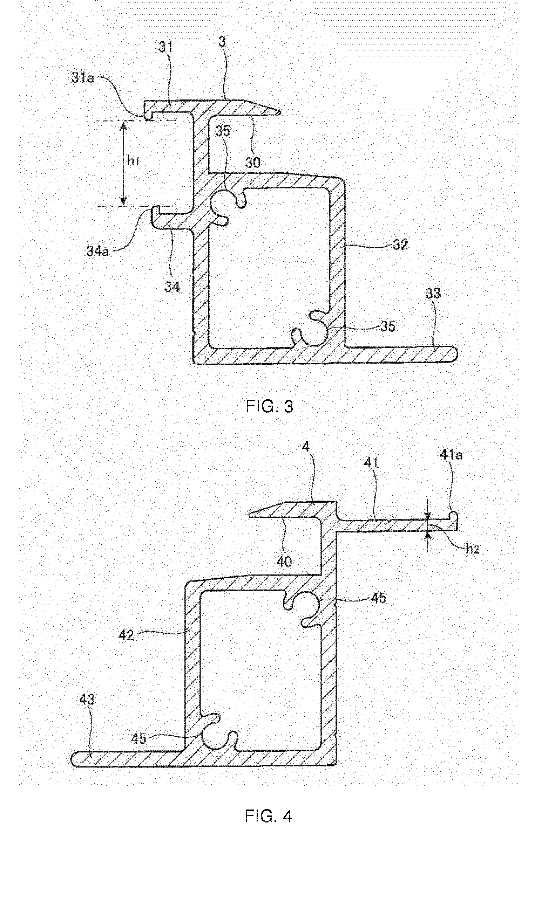

As shown in FIG. 3 through FIG. 5, the lower frame 3, the upper frame 4 and the side frame 5 can be made of aluminum, ion or stainless steel, and can be extrusion molded.

As shown in FIG. 3, the lower frame 3 has a hollow main portion 32, and a fitting portion 30 with a C-shaped cross-section positioned in the upper portion of the main portion 32 with packing made of an insulating resin such as butyl rubber or silicone resin on the peripheral edges of the solar cell panel 1.

An upper flange 31 is provided on the lower frame 3 and connected to the upper side of the fitting portion 30 for engaging the frame mounting portion on a cross rail 6 described below. A protruding portion 31a extending downward is provided on the tip of the upper flange 31. In the middle of the main portion 32, a lower flange 34 is provided which faces the upper flange 31, and a protruding portion 34a extending upward is provided on the tip of the lower flange 34.

Also, a flange 33 connected to the lower side of the main portion 32 and extending towards the solar cell panel 1 is provided in the main portion 32. A screw portion 35 is provided in the main portion 32 for mounting a side frame 5. The lower frame 3 and a side frame 5 are fixed by passing a screw through the side frame 5 and screwing it into the screw portion 35.

As shown in FIG. 4, the upper frame 4 has a hollow main portion 42, and a fitting portion 40 with a C-shaped cross-section positioned in the upper portion of the main portion 42 with packing made of an insulating resin such as butyl rubber or silicone resin on the peripheral edges of the solar cell panel 1.

An upper flange 41 is provided in the upper frame 4 which is connected to the upper side of the fitting portion 40, placed on the frame mounting portion 62 of a cross rail 6, and interposed in the lower frame 31. The protruding portion 41a which extends upward is provided on the tip of the upper flange 41.

Also, a flange 43 connected to the lower side of the main portion 42 and extending towards the solar cell panel 1 is provided in the main portion 42. A screw portion 45 is provided in the main portion 42 for mounting a side frame 5. The upper frame 4 and a side frame 5 are fixed by passing a screw through the side frame 5 and screwing it into the screw portion 45.

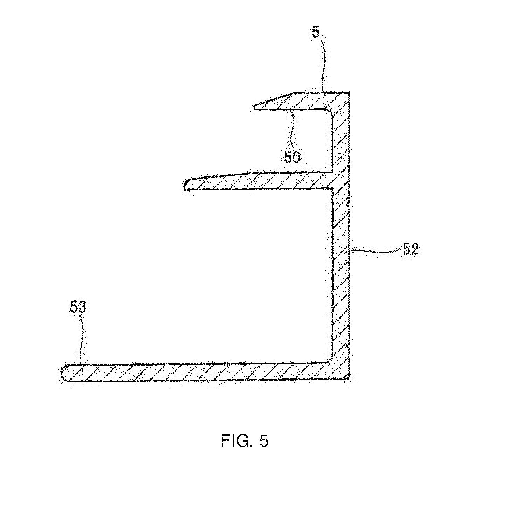

As shown in FIG. 5, each side frame 5 has a main portion 52, and a fitting portion 50 with a C-shaped cross-section positioned in the upper portion of the main portion 52 with packing made of an insulating resin such as butyl rubber or silicone resin on the peripheral edges of the solar cell panel 1.

A flange 52 is provided on the lower side of the main portion 52 that extends towards the solar cell panel 1.

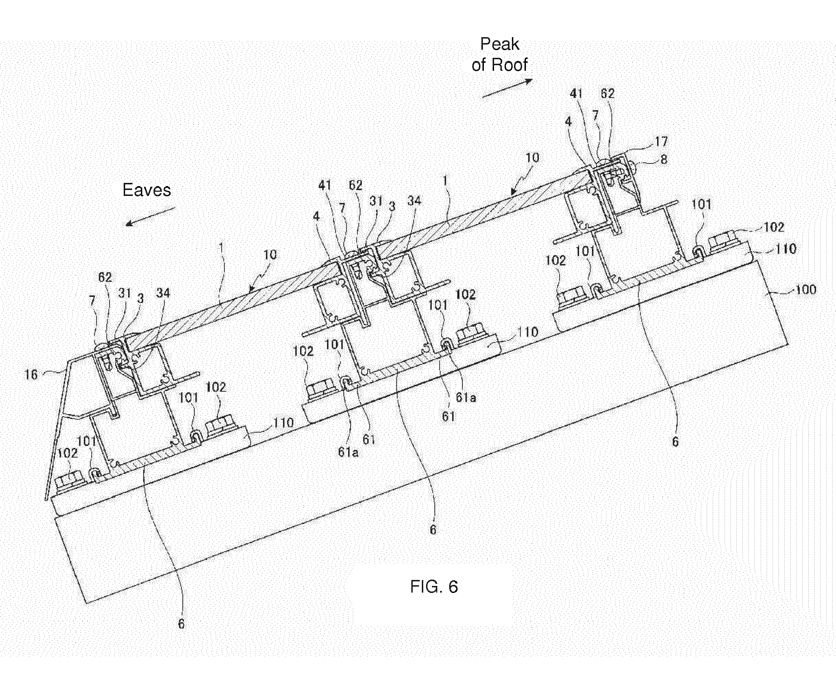

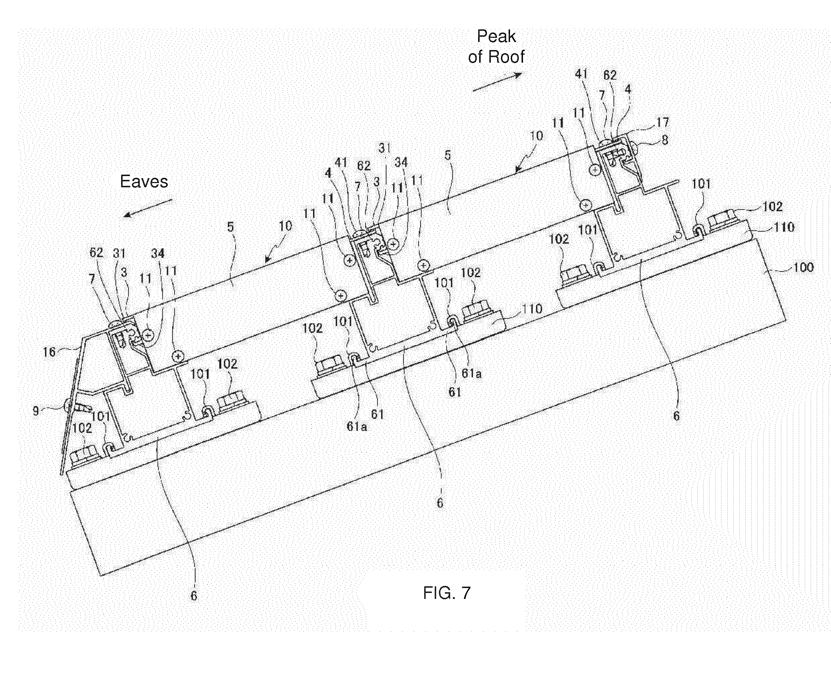

FIG. 6 is a cross-sectional view showing a photovoltaic power generator according to a first embodiment of the present invention installed on a roof, and FIG. 7 is a side view showing a photovoltaic power generator according to a first embodiment of the present invention installed on a roof.

As shown in FIG. 6 and FIG. 7, cross rails 6 serving as the base are secured to the roof 100 by fitting it with pressing fixtures 101 at a predetermined interval in the direction perpendicular to the inclination direction of the roof 100 (the direction from the eaves to the ridge). The pressing fixtures 101 are fixed to straight brackets 110 fixed to the roof 100 using nuts and bolts.

The secured cross rails 6, 6 are parallel to each other and extend horizontally across the roof 100. The cross rails 6, 6 adjacent to each other in the inclination direction of the roof 100 are provided at an interval corresponding to the vertical width of the solar cell module 10 including the mounted frames 3, 4, 5 (the width in the inclination direction of the roof when installed on the roof 100).

The lower frame 3 and upper frame 4 are fixed to the pair of cross rails 6, 6 to mount the solar cell module 10. As shown in FIG. 7, in the solar cell module 10, the side frames 5 are mounted on the lower frame 3 and the upper frame 4 using screws 11.

The upper flange 41 of the upper frame 4 of the solar cell module 10 positioned on the peak side of a cross rail 6 is placed on the frame mounting portion 62 of the cross rail 6 on the eaves side, and the frame mounting portion 62 of the cross rail 6 is interposed via the upper flange 41 between the upper and lower flanges 31, 34 of the lower frame 3, and the upper frame 4 and the lower frame 3 are secured. Because the upper frame 4 of the solar cell module 10 positioned on the eaves side is interposed by the lower frame 3 of the solar cell module 10 positioned on the peak side and secured to the cross rail 6, it is secured strongly against a load caused by the blowing wind.

In the first embodiment shown in FIG. 6 and FIG. 7, the flange 41 of the upper frame 4 is fixed to the cross rail 6 by a screw to further increase the fixing strength.

A peak-side cover 17 is mounted by a screw 8 on the highest cross rail 6 arranged on the peak side, and an eaves-side cover 16 is mounted by a screw 7 on the lowest cross rail 6 arranged on the eaves side. The peak-side cover 17 has an upper and lower flange similar to the upper and lower flanges 31, 34 of the lower frame 3. The upper flange 41 of the upper frame 4 placed on the frame mounting portion 62 of the cross rail 6 is interposed by the upper and lower flanges of the peak-side cover 17, and the upper frame 4 is interposed in and secured to the cross rails 6. Because the upper frame 4 of the solar cell module 10 is interposed by the peak-side cover 17 and fixed to the cross rails 6, even the solar cell module 10 positioned closest to the ridge is secured strongly against a load caused by the blowing wind.

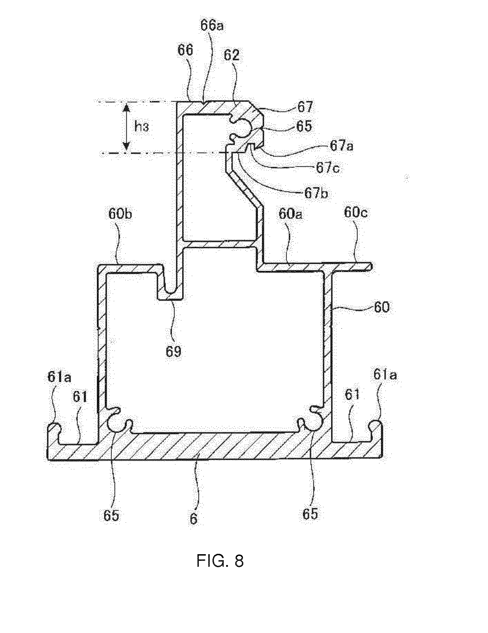

The following is an explanation of the cross rails 6 with reference to FIG. 8. FIG. 8 is a cross-sectional view of a cross rail. As shown in FIG. 8, the rail 6 is made of aluminum, iron or stainless steel and can be extrusion molded.

A frame mounting portion 62 is formed in the cross rail 6 and is connected to the top of the hollow main portion 60. The frame mounting portion 62 has an upper surface portion 66 in which the upper flange 41 of the upper rail 4 is placed, and an engaging portion 67 protruding towards the ridge in order to engage the upper and lower flanges 31, 34 of the lower frame 3. A groove 66a is formed in the upper surface portion 66 in which the upper flange 41 of the upper frame 4 is secured using a screw.

The upper and lower flanges 31, 34 of the lower frame 3 engage the engaging portion 67, and the solar cell module 10 is rotated downward, dropped in, and engaged. A tapered surface 67a is provided in the engaging portion 67 extending from the peak side to the eaves side so that the lower flange 34 can be successfully dropped in. A contact surface 67b is formed in the base portion of the engaging portion 67 which comes into contact with the protruding portion 34a of the lower flange 34. As mentioned earlier, the height h3 between the contact surface 67b and the upper surface portion 66 has dimensions which create a tight fit when the upper flange 41 of the upper frame 4 has been placed in the upper surface portion 66, and interposed between the upper and lower flanges 31, 34 of the lower frame 3.

A recessed portion 67c is provided between the tapered surface 67a and the contact surface 67b. When the solar cell module 10 has been moved in an upward direction, the recessed portion 67c engages the protruding portion 34a on the lower flange 34 of the lower frame 3. When the protruding portion 34a engages the recessed portion 67c, the solar cell module 10 is kept from being lifted up.

The side of the main portion 60 facing the ridge has an upper side portion 60a that makes contact with the lower side of the main portion 32 of the lower frame 3, an upper flange 60c that is connected to the upper side portion 60a. When the solar cell module 10 is secured, the upper flange 60c extends towards the side of the solar cell module 10 to keep the solar cell module 10 from falling onto the roof 100.

In the present invention, the vertically positioned solar cell module 10 overlaps each frame and is sandwiched. As a result, the dimensions of the frame mounting portion 62 of the cross rail 6 can be narrowed in the inclination direction of the roof, and the distance between solar cell modules 10, 10 can be reduced. Because the distance between solar cell modules 10, 10 can be reduced, the size of the main portion 60 of the cross rail 6 can be reduced in the inclination direction of the roof, and the amount of material used can be reduced. Also, the space required for installation of the solar cell modules 10 can be reduced on the surface of the roof. Alternately, more solar cell modules 10 can be installed in the same amount of space.

When the size of the main portion 60 of the cross rail 6 is reduced relative to the inclination direction of the roof, the size of the upper side portion 60a of the main portion 60 is also reduced. However, in the present embodiment, as mentioned earlier, the solar cell module 10 can be kept from falling onto the roof 100 because the upper flange 60c is connected to the side portion 60a.

An upper side portion 60b is formed on the eaves side of the main portion 60 which comes into contact with the lower side of the main portion 42 of the upper frame 4. A groove 69 is also formed in main portion 60 on the eaves side to engage the rear end portion of the eaves-side cover 16.

Lower flanges 61, 61 are provided on the lower end of the main portion 60 on both the eaves side and the peak side, and a protruding portion 61a extending upward is provided on the tip portion of both lower flanges 61, 61. A pressing fixture 101 is fitted into the protruding portion 61a of the lower flange 61, and the cross rail 6 is secured to the roof 100.

A screw portion 65 is provided in the cross rail 6 to mount the cross rail cover.

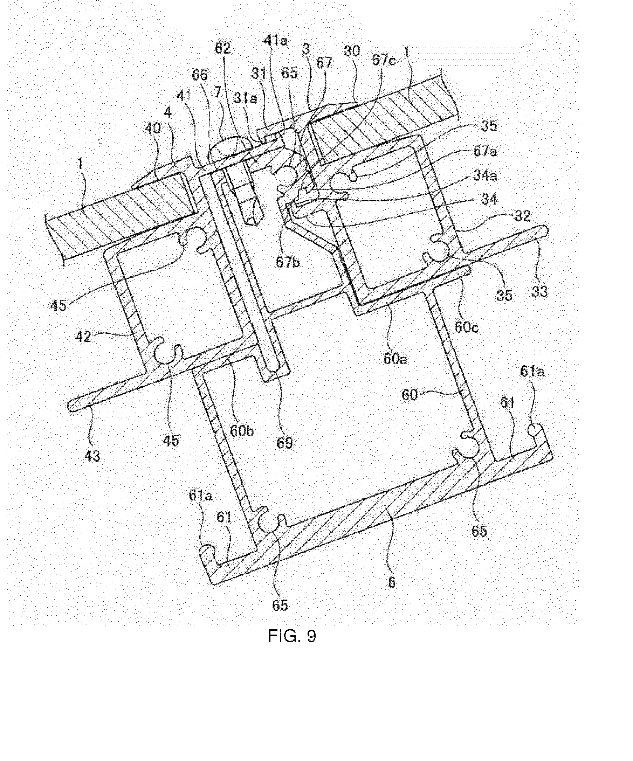

FIG. 9 is an enlarged cross-sectional view showing the frame and cross rail of a solar cell module in a photovoltaic power generator according to a first embodiment of the present invention. The following is an explanation, with reference to FIG. 9, of how the lower frame 3, upper frame 4, and cross rail 6 are secured with the solar cell module 10, 10 positioned vertically with respect to the cross rail 6.

The lower side of the main portion 42 of the upper frame 4 of the solar cell module 10 positioned on the eaves side comes into contact with the upper end portion 60b of the main portion 60 of the cross rail 6, and the upper flange 41 of the upper frame 4 is placed on the upper surface portion 66 of the frame mounting portion 62 of the cross rail 6. Then, in the present embodiment, the upper surface portion 66 of the cross rail 6 and the upper flange 41 of the upper frame 4 of the solar cell module 10 positioned on the eaves side is fixed using screws 7.

The engaging portion 67 provided on the frame mounting portion 62 of the cross rail 6 engages the upper and lower flanges 31, 34 of the lower frame 3 of the solar cell module 10 arranged on the peak side.

The upper flange 41 of the upper frame 4 of the upper surface portion 66 is placed on the frame mounting portion 62. Next, the lower flange 31 of the lower frame 3 engages the upper flange 41 of the upper frame 4. When the lower flange 31 has engaged the upper flange 41, the solar cell module 10 arranged on the eaves side is rotated downwards and dropped in. In this way, the upper flange 41 of the upper frame 4 is interposed with the cross rail 6 by the upper and lower flanges 31, 34 of the lower frame 3, and the upper frame 4, the cross rail 6 and the lower frame 3 are secured.

The lower flange 34 is smoothly dropped in along the tapered surface 67a from the peak side to the eaves side of the engaging portion 67, and the contact surface 67b of the base portion of the engaging portion 67 comes into contact with the protruding portion 34a of the lower flange 34. The protruding portion 31a of the upper flange 31 comes into contact with the surface of the upper flange 41 of the upper frame 4. As mentioned earlier, the height h3 between the contact surface 67b and the upper surface portion 66 has dimensions which create a tight fit when the upper flange 41 of the upper frame 4 has been placed in the upper surface portion 66, and interposed between the upper and lower flanges 31, 34 of the lower frame 3.

The height h1 between the protruding portions 31a, 34a is equal to or slightly smaller than the sum of the thickness h2 of the flange 41 of the upper frame 4 and the height h3 of the frame mounting portion 62 of the cross rail 6 so as to take into account the machining tolerance. When the flange 41 of the upper frame 4 has been interposed in the frame mounting portion 62 of the cross rail 6, it is secured between the upper and lower flanges 31, 34 of the lower frame 31 because of the tight fit. Because the upper frame 3 of the solar cell module 10 positioned on the eaves side is interposed with the cross rail 6 by the lower frame 3 of the solar cell module 10 positioned on the peak side, it is secured strongly against lift caused by the blowing wind.

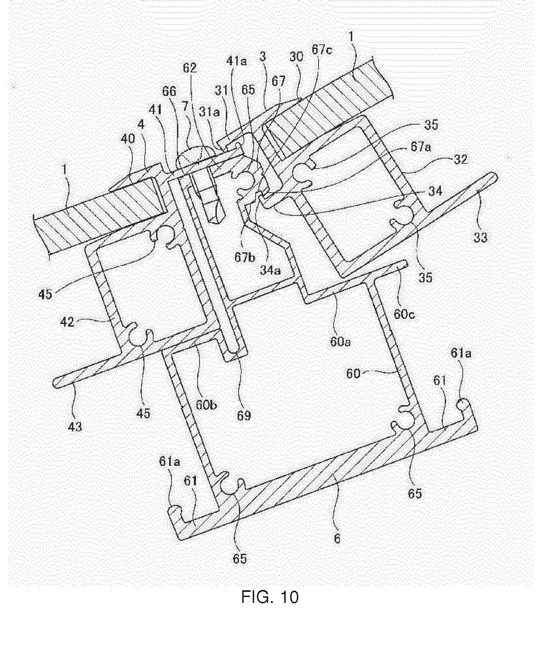

FIG. 10 is an enlarged cross-sectional view showing the frame and cross rail of a solar cell module in a photovoltaic power generator according to a first embodiment of the present invention in which the solar cell module 10 has been lifted up by a load caused by the blowing wind. The following is an explanation, with reference to FIG. 10, of how a solar cell module 10 is lifted up by a load caused by the blowing wind.

The solar cell module 10 is lifted up by a load caused by the blowing wind. However, even when the lower flange 34 of the lower frame 3 has moved along the engaging portion 67 of the frame mounting portion 62, the protruding portion 34a of the lower flange 34 of the lower frame 3 becomes engaged in the recessed portion 67c before reaching the tapered surface 67a. When the recessed portion 67c and the protruding portion 34a become engaged, upward movement of the solar cell module 10 is restricted, and the solar cell module 10 is kept from being lifted up by the wind.

Because the upper frame 3 of the solar cell module 10 positioned on the eaves side is interposed with the cross rail 6 by the lower frame 3 of the solar cell module 10 on the peak side, it is secured strongly against loads caused by the blowing wind. Even when the solar cell module 10 is lifted up and moved upward on the cross rail 6, the recessed portion 67c and the protruding portion 34a restrict further movement, and the solar cell module 10 is kept from being lifted up further by the wind. When there is no load caused by the blowing wind, gravity disengages the protruding portion 34a from the recessed portion 67c, and the protruding portion moves towards the base portion of the engaging portion 67 and returns to the position shown in FIG. 9.

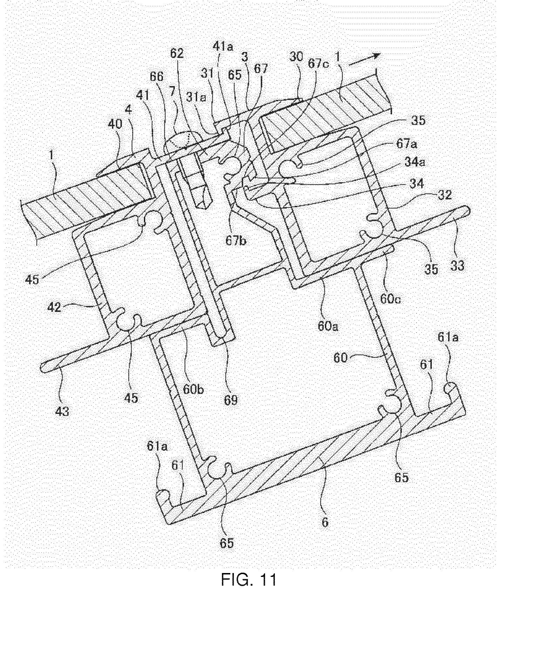

FIG. 11 is an enlarged cross-sectional view showing the frame and cross rail of a solar cell module in a photovoltaic power generator according to a first embodiment of the present invention in which the solar cell module 10 has been moved towards the ridge by a load caused by the blowing wind. The following is an explanation, with reference to FIG. 11, of a situation in which a solar cell module 10 has been moved towards the ridge by a load caused by the blowing wind.

When a solar cell module 10 has been moved towards the ridge by a load caused by the blowing wind, the protruding portion 31a of the upper flange 31 of the lower frame 3 engages the protruding portion 41 a of the upper flange 41 of the upper frame 4 of the solar cell module 10 positioned on the eave side and fixed to the frame mounting portion 62 of the cross rail 6. When the protruding portion 41a of the upper frame 4 engages the protruding portion 31a of the lower frame 3, movement of the solar cell module 10 is suppressed. When there is no load caused by the blowing wind, gravity returns the configuration to the state shown in FIG. 9.

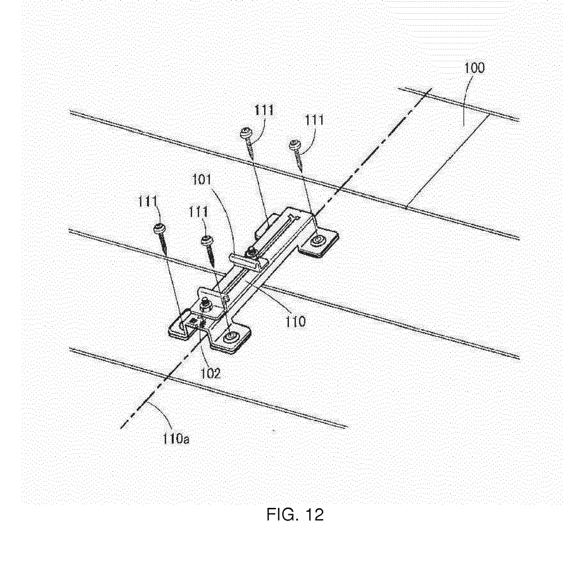

The following is an explanation, with reference to FIG. 12 through FIG. 38, of the steps performed to install a solar cell module of the present invention on a roof.

As shown in FIG. 12, a straight bracket 110 is fixed to the roof 100 on a straight bracket marking 110a using screws 111. A metal base plate may be mounted on the roof 100 to secure the straight bracket 110.

A pair of upside-down U-shaped pressing fixtures 101 is provided on the straight bracket 110. The pressing fixtures 101 can be moved along the gradient of the roof 100 by loosening the nut 102.

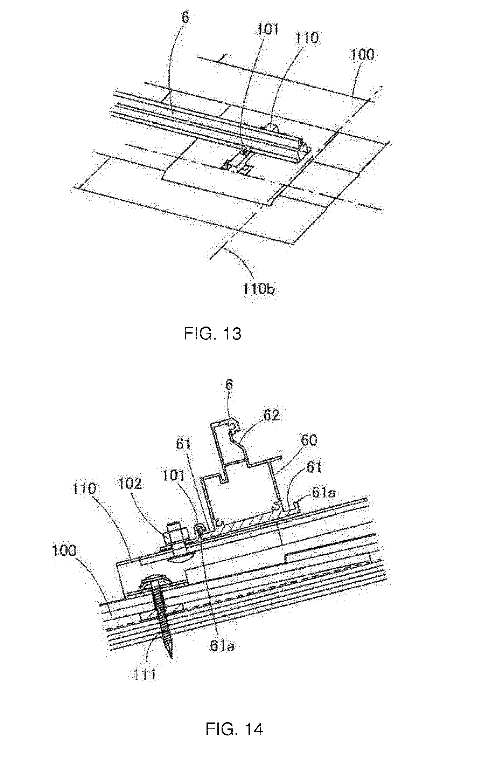

After a predetermined number of straight brackets 110 has been mounted on the roof 100 in predetermined positions, a cross rail 6 is mounted. First, as shown in FIG. 13, the end portion of the cross rail 6 is aligned with a vertical reference mark 110b and temporarily secured. When cross rails 6 are joined together, they are joined together using a cross rail joint which has a shape corresponding to the main portion 60 of the cross rails 6.

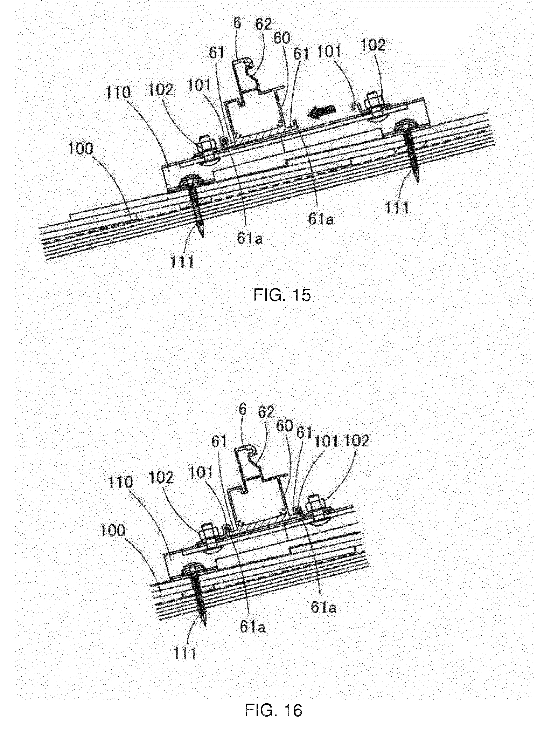

As shown in FIG. 14, the protruding portion 61a on the lower bracket 61 of the main portion 60 of the cross rail 6 positioned on the eaves side is fitted securely into the upside-down U-shaped portion of the pressing fixture 101, and the nut 102 is tightened. As shown in FIG. 15, the pressing fixture 101 on the peak side is moved. Then, as shown in FIG. 16, the protruding portion 61a on the lower flange 61 on the peak side is fitted securely into the upside-down U-shaped portion of the pressing fixture 101, and the nut 102 is tightened.

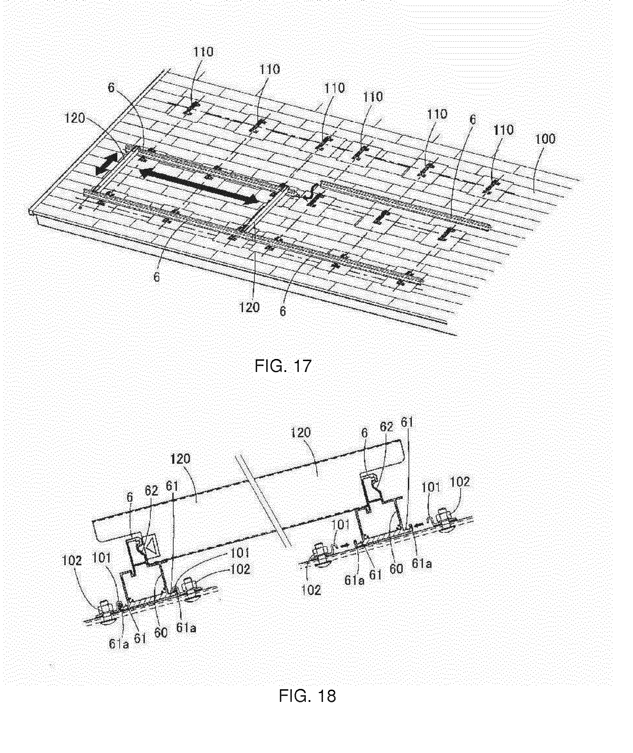

After temporarily securing the cross rails 6 a second time, as shown in FIG. 17 and FIG. 18, the cross rails 6 are secured at a predetermined pitch using a cross rail gauge 120. After all of the cross rails 6 have been secured, they are connected with screws when there is a connected portion in the cross rails 6 using a cross rail joint.

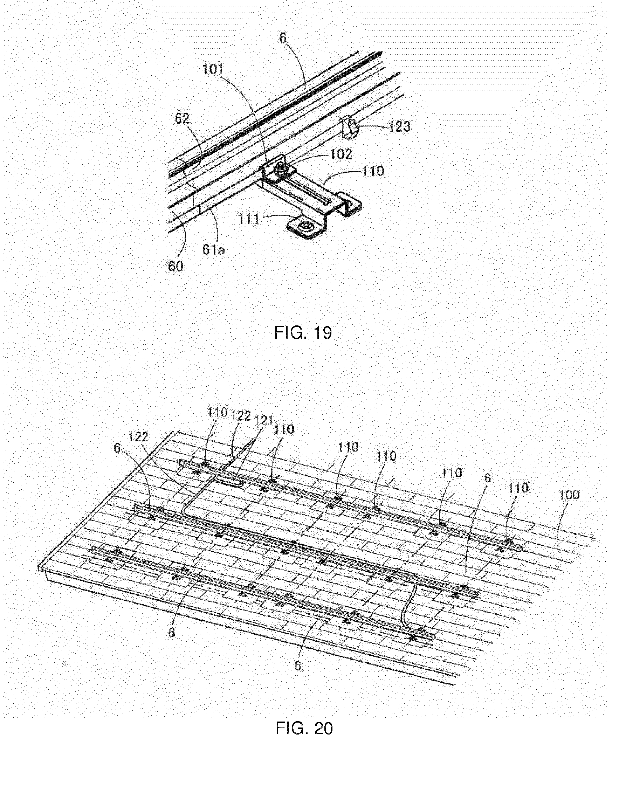

When all of the cross rails 6 have been secured, as shown in FIG. 19, a clip 123 for holding the cable 1f from the solar cell module 10 is mounted on the peak side of the cross rail 6. The cable 1f is held by this clip 123. A grounding wire 121 is mounted on the eaves side of the cross rail 6. As explained below, the ground of the solar cell module 10 is connected via the cross rail 6. However, a grounding bracket is pressed into a space between the cross rail 6 and the lower frame 3 of the solar cell module 10 to connect cross rails 6, 6. In FIG. 20, line 122 is used to guide the cables If.

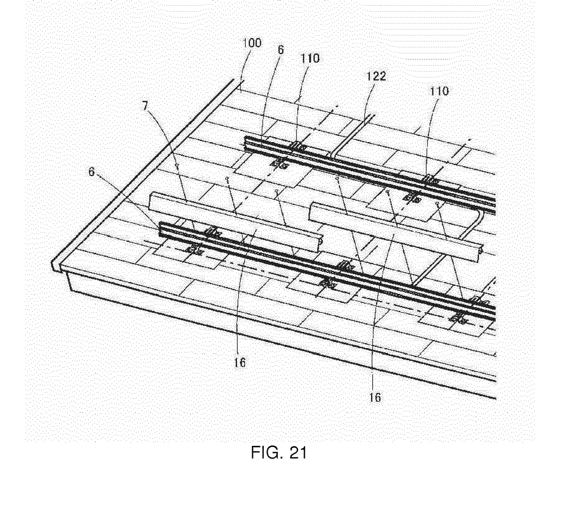

As shown in FIG. 21, an eaves-side cover 16 is mounted on the cross rail 6 closest to the eaves. The rear end portion of the eaves-side cover 16 is engaged with a groove in the main portion 60 of the cross rail 6, and the eaves-side cover 16 is mounted on the cross rail 6 with screws 7.

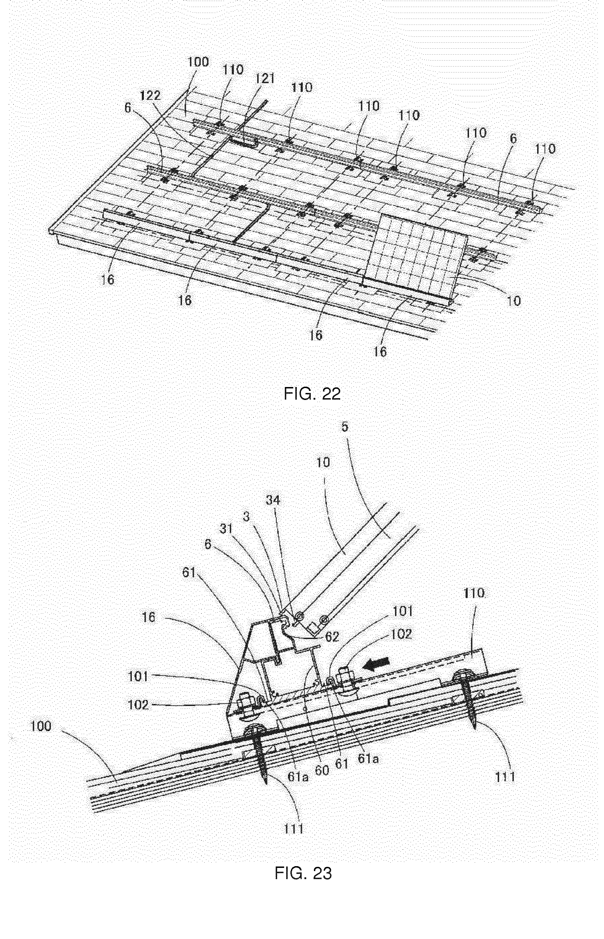

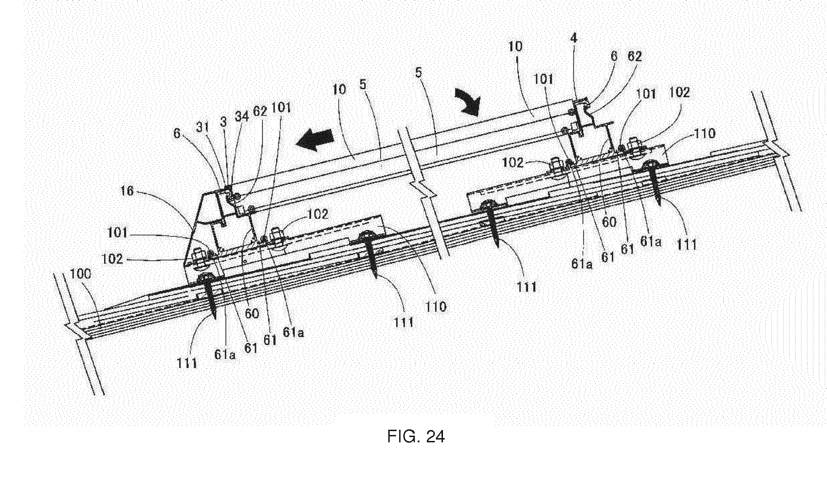

Next, as shown in FIG. 22 through FIG. 24, solar cell modules 10 are mounted on the cross rails 6, 6. As shown in FIG. 23, the lower frame 3 side of the solar cell module 10 is placed on the cross rail 6 on the eaves side. The protruding portion 31a of the upper flange 31 of the lower frame 3 is placed on the upper surface portion 66 of the frame mounting portion 62 of the cross rail 6 on the eaves side. Then, as shown in FIG. 24, the solar cell module 10 is tilted downward onto the roof 100, the solar cell module 10 is dropped in, and the engaging portion 67 of the frame mounting portion 62 of the cross rail 6 is interposed by the upper and lower flanges 31, 34 of the lower frame 3. Then, the upper flange 41 of the upper frame 4 is placed on the upper surface portion 66 of the frame mounting portion 62 of the cross rail 6 on the peak side. Afterwards, the solar cell module 10 is raised towards the eaves side.

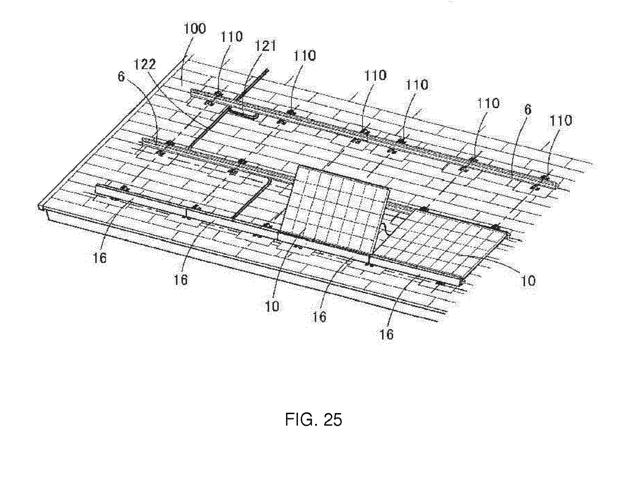

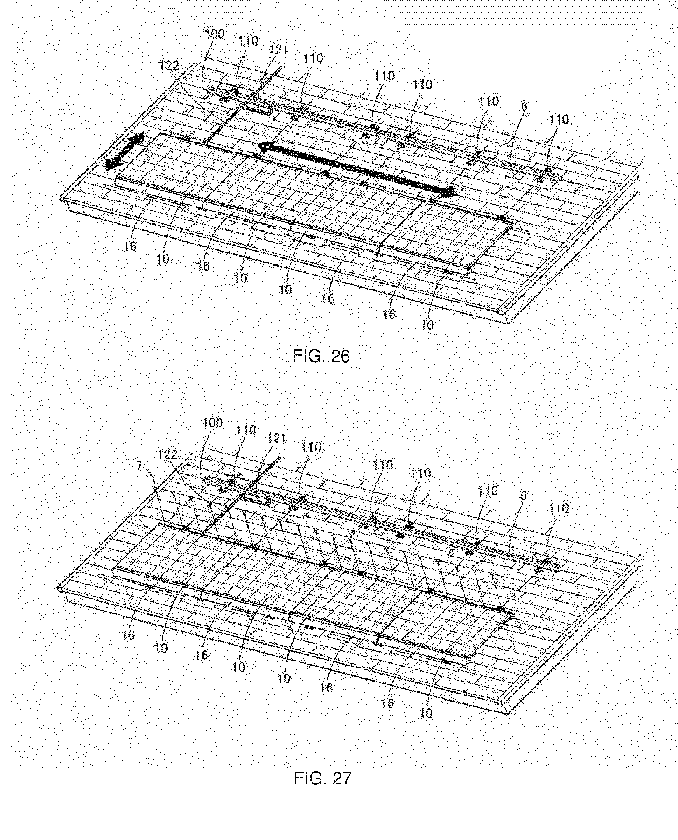

As shown in FIG. 25, a second solar cell module 10 is mounted in the same way and the cables If, If are connected. As shown in FIG. 26, fine adjustments are made in the positioning when the wiring of a solar cell module 10 has been completed on each level. Afterwards, as shown in FIG. 27, the upper flange 41 of the upper frame 4 of the solar cell module 10 and the cross rail 6 are secured using screws 7. In this example, each solar cell module 10 is secured using five screws 7. These components can be secured with screws by a worker positioned on the roof 100 to the peak side of the cross rail 6. As a result, the worker does not have to step onto the slippery solar cell module 10, and work efficiency is improved.

In a photovoltaic power generator comprising solar cell modules 10 and cross rails 6 serving as the base, all of the solar cell modules 10 are grounded. Each solar cell module 10 may be grounded by installing a grounding wire, but this increases material costs and complicates installation by increasing the number of steps. Therefore, the photovoltaic power generator can be integrated electrically and grounded using a single grounding wire 121.

As shown in FIG. 27, the upper frame 4 of each solar cell module 10 is secured to a cross rail 6 using metal screws 7 to integrate the modules electrically. However, the lower rail 3 of each solar cell module 10 is separate from the rail electrically. Therefore, they need to be integrated electrically. In the present embodiment, as explained below, a grounding bracket with several protrusions is pressed into the space between the cross rail 6 and the lower frame 3 to connect the lower frame 3 and the cross rail 6 electrically. The joints fitted to inside the cross rails 6 to connect the cross rails 6 are also secured using screws to integrate them electrically.

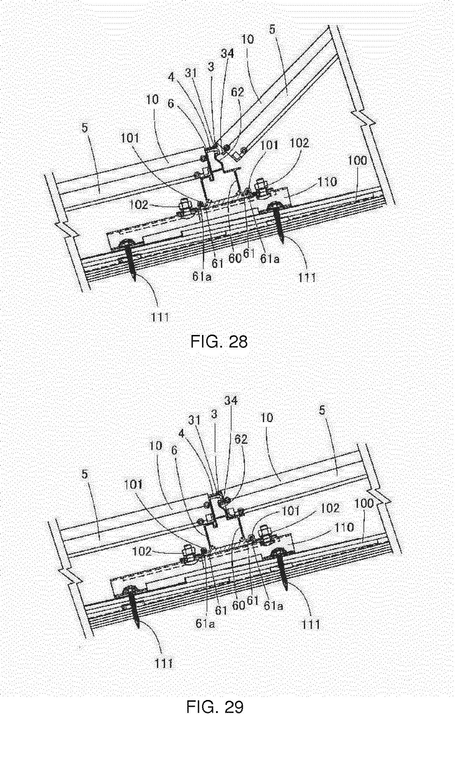

As shown in FIG. 28 and FIG. 29, after securing the lower-level solar cell module 10 to the cross rail 6, the solar cell module 10 is mounted on the cross rail 6 positioned on the eaves side from the ridge side with respect to the cross rail 6. As shown in FIG. 28, the lower frame 3 of the solar cell module 10 is placed on the upper flange 41 of the upper frame 4 of the lower-level solar cell module 10 placed on the eaves-side cross rail 6. In other words, the protruding portion 31a of the upper flange 31 of the lower frame 3 is placed on the upper flange 41 of the upper frame 4 of the lower-level solar cell module 10 mounted on the upper surface portion 66 of the frame mounting portion 62 of the cross rail 6. Then, as shown in FIG. 29, the solar cell module 10 is tilted downward towards the roof 100, the solar cell module 10 is dropped in, the frame mounting portion 62 of the cross rail 6 is interposed via the upper flange 41 between the upper and lower flanges 31, 34 of the lower frame 3, and the upper frame 4 and lower frame 3 are secured. The upper flange 41 of the upper frame 4 is then placed on the upper surface portion 66 of the frame mounting portion 62 of the cross rail 6 on the ridge side. Afterwards, the solar cell module 10 is tilted upward towards the eaves.

During installation, the worker is on the roof 100 behind the solar cell module 10 on the ridge side, and holds and fits the solar cell module 10 while facing the eaves side. Because the installation is performed from behind on the ridge side, the worker is able to keep his or her balance on the roof 100 while installing modules.

The cables 1f, If are connected to the solar cell modules 10 and mounted in the same way. When the wiring of each solar cell module 10 has been completed, fine adjustments are made to their position. Then, as mentioned earlier, the upper flange 41 of the upper frame 4 of the solar cell modules 10 is secured to a cross rail 6 using screws 7.

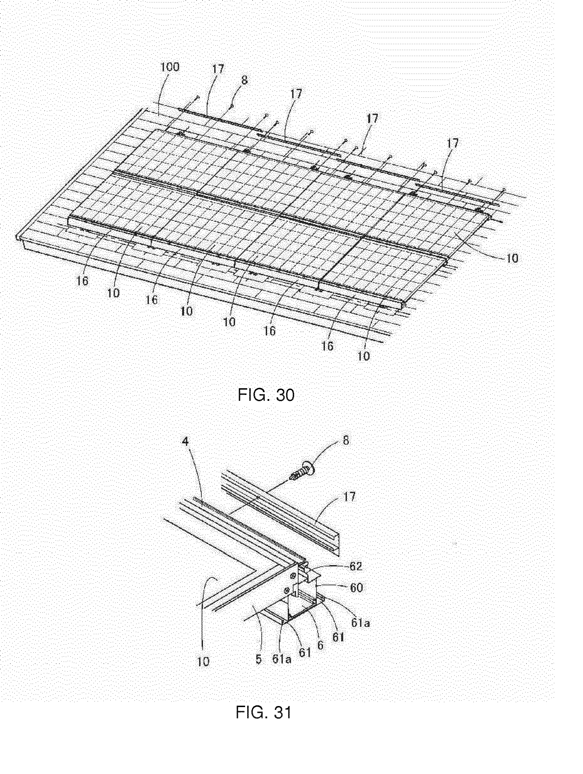

After all of the solar cell modules 10 have been installed on the cross rails 6, as shown in FIG. 30 and FIG. 31, the upper flange 41 of the upper frame 4 is interposed between the upper and lower flanges of the ridge-side cover 17 on the uppermost cross rail 6, and the ridge-side cover 17 is secured using screws 8.

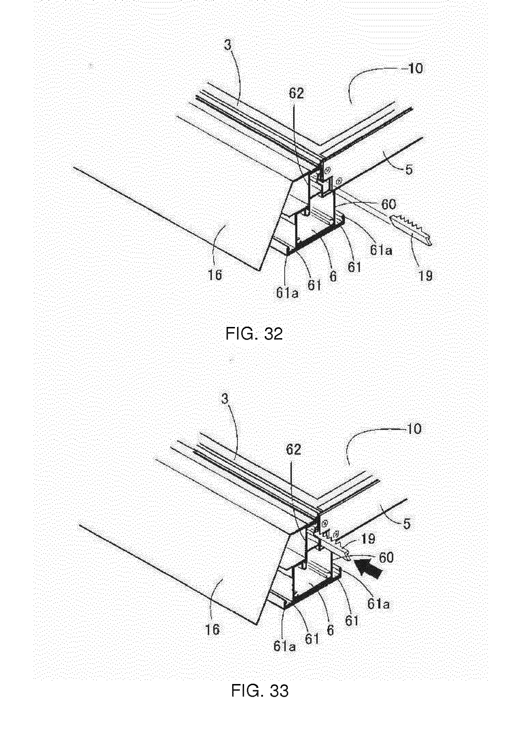

As shown in FIG. 32 and FIG. 33, a grounding bracket 19 is inserted into the space between the cross rail 6 and the solar cell module 10 on the eaves side, that is, into the space between the cross rail 6 and the lower frame 3 to electrically integrate the components.

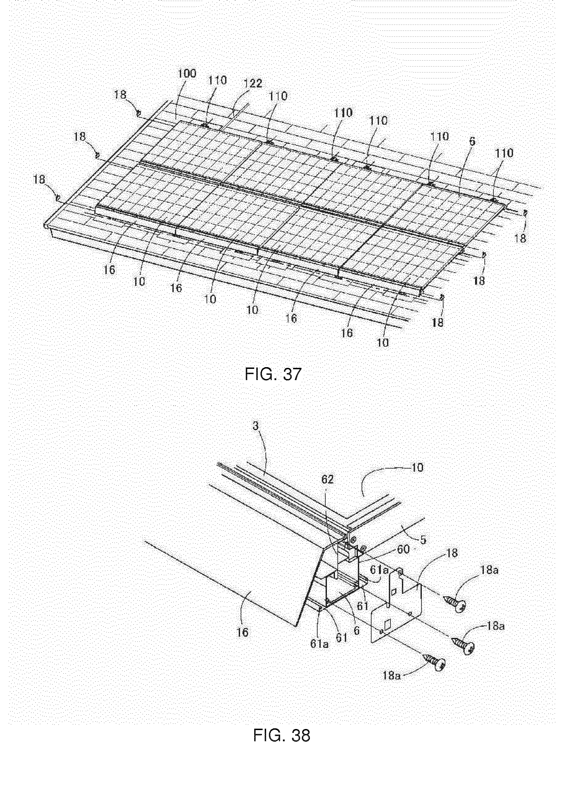

Finally, as shown in FIG. 37 and FIG. 38, a cross rail cover 18 is secured to the end portion of the cross rail 6 using screws 18a, and the photovoltaic power generator has been installed on the roof 100.

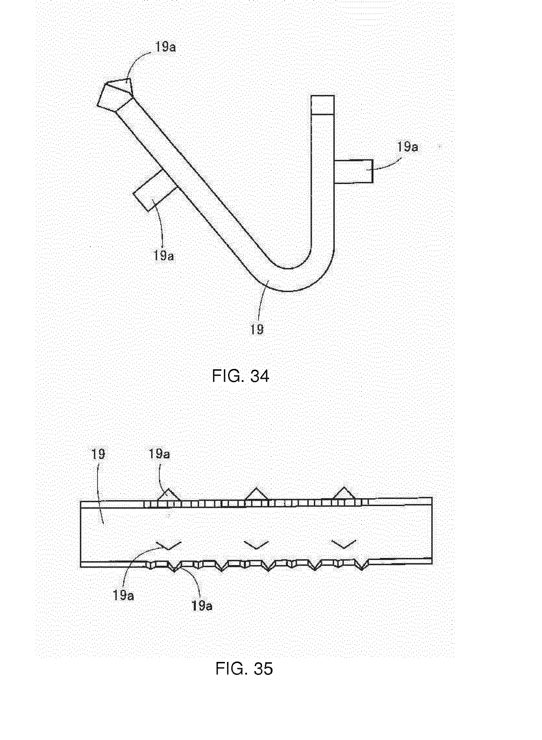

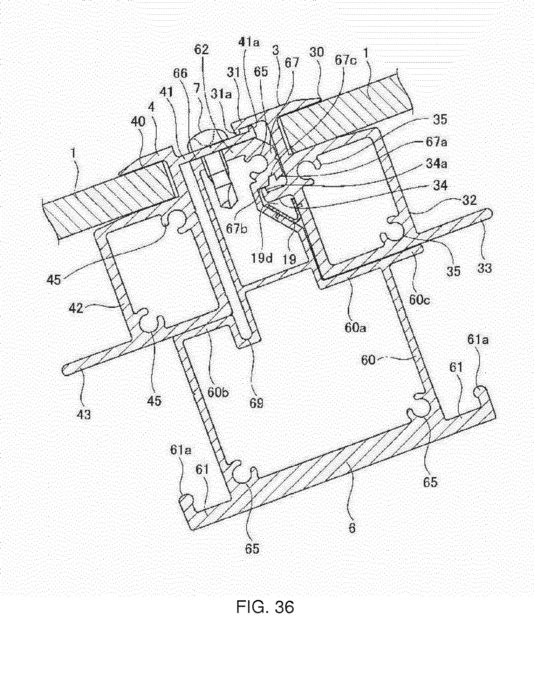

The following is an explanation of how a grounding bracket 19 is mounted between a cross rail 6 and a lower frame 3 with reference to FIG. 34 through FIG. 36. As shown in FIG. 36, the grounding bracket 19 is shaped so that it can be inserted into the space 19d between the cross rail 6 and the lower frame 3. As shown in FIG. 36, a space 19d with a downward-facing triangular shape is formed between the lower portion of the engaging portion 67 of the cross rail 6 and the lower flange 34 of the lower frame 3. A U-shaped grounding bracket 19 is formed which conforms to the downward-facing triangular shape of this space. As shown in FIG. 34 and FIG. 35, a plurality of claw portions 19a are provided on the surface of the grounding bracket 19. When the grounding bracket 19 is inserted into the space 19d between the cross rail 6 and the lower frame 3, the claw portions 19a of the grounding bracket 19 bite into the lower frame 3, and the cross rail 6 and the lower frame 3 are electrically integrated.

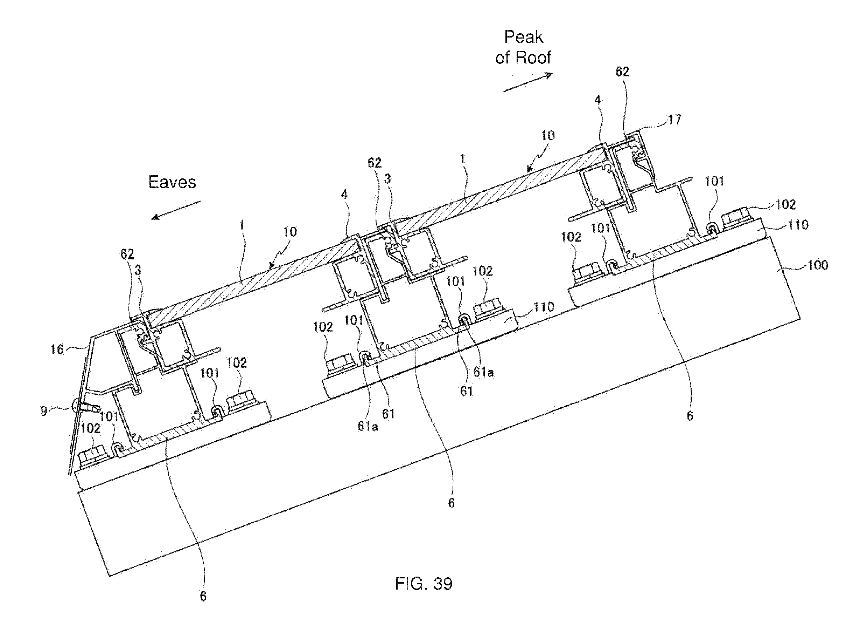

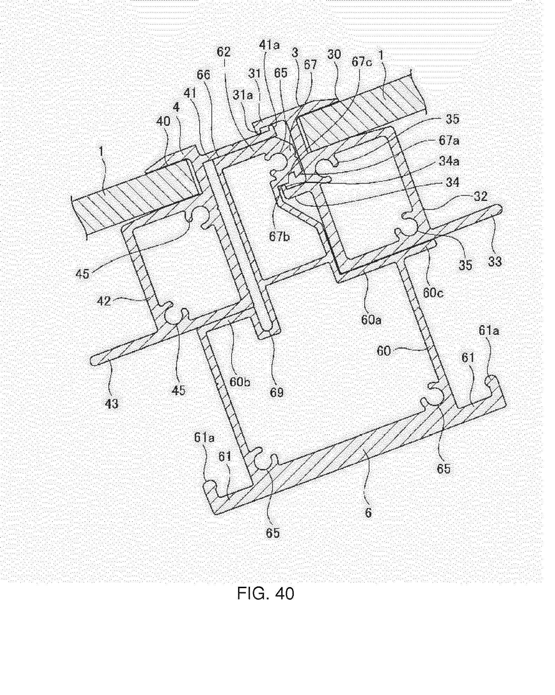

The following is an explanation of a second embodiment of the present invention with reference to FIG. 39 and FIG. 40. FIG. 39 is a cross-sectional view showing a photovoltaic power generator according to a second embodiment of the present invention installed on a roof, and FIG. 40 is an enlarged cross-sectional view showing a frame and cross rail of a solar cell module for a photovoltaic power generator according to a second embodiment of the present invention. All components that are identical or equivalent in function to those of the first embodiment are denoted by the same reference numbers in the drawings, and the explanation of these components has not been repeated in order to avoid redundancy.

In the first embodiment, the upper flange 41 of the upper frame 4 is secured to the cross rail 6 using screws. In the second embodiment, screws are not used. Instead, the engaging portion 67 of the cross rail 6 is interposed via the upper flange 41 between the upper and lower flanges 31, 34 of the lower frame 3, and the resulting fastening force secures the upper frame 4 and the lower frame 3. The dimensions between the upper and lower flanges 31, 34 are set to increase the fastening force, and this force is strong enough to provide a pressing load that can withstand a load caused by the blowing wind even through screws have been omitted. The modules are easier to install because screws are not required. When the upper frame 4 and the cross rail 6 are made of aluminum, an insulating cover is formed on the surface. As a result, the upper flange 41 does not come into direct contact with the upper surface portion 66 of the cross rail 6, and the components are not grounded. Here, the upper surface portion 66 and the upper flange 41 can be connected and grounded using a star washer, or each solar cell module 10 can be connected and grounded using a single screw.

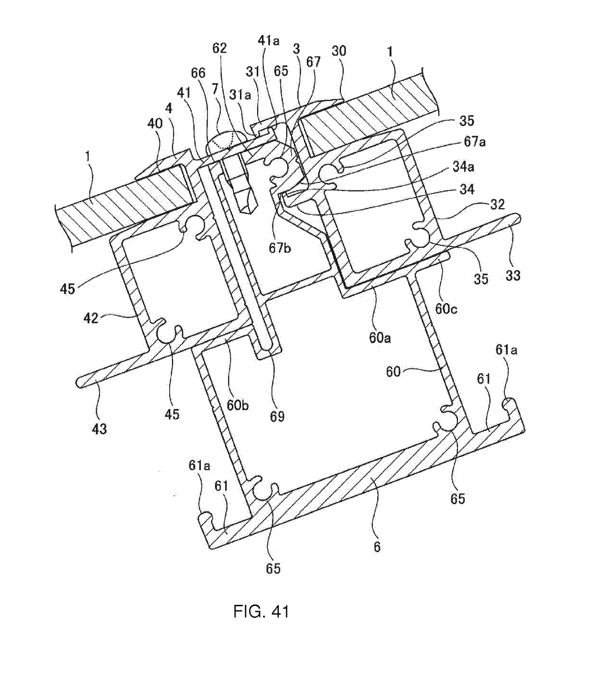

The following is an explanation of a third embodiment of the present invention with reference to FIG. 41. FIG. 41 is an enlarged cross-sectional view showing a frame and cross rail of a solar cell module for a photovoltaic power generator according to a third embodiment of the present invention. All components that are identical or equivalent in function to those of the first embodiment are denoted by the same reference numbers in the drawing, and the explanation of these components has not been repeated in order to avoid redundancy.

In the embodiment shown in FIG. 41, there is no recessed portion 67c provided in the engaging portion 67 of the cross rail 6. Instead, a continuous surface is formed from the tapered surface 67a to the contact portion 67b of the base portion. Because such a continuous surface has been formed, when the flange 34 of the lower frame 3 of the solar cell module 10 has been rotated and dropped in, it is inserted smoothly towards the base portion.

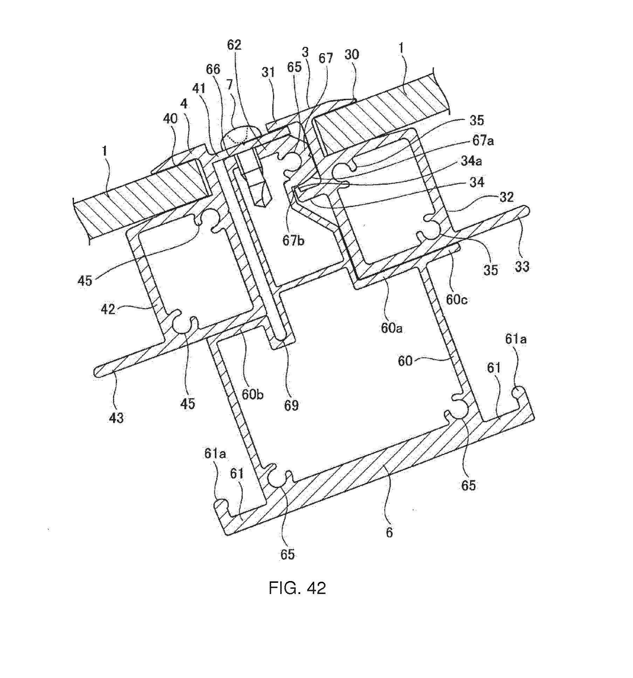

The following is an explanation of a fourth embodiment of the present invention with reference to FIG. 42. FIG. 42 is an enlarged cross-sectional view showing a frame and cross rail of a solar cell module for a photovoltaic power generator according to a fourth embodiment of the present invention. All components that are identical or equivalent in function to those of the first embodiment are denoted by the same reference numbers in the drawing, and the explanation of these components has not been repeated in order to avoid redundancy.

In the embodiment shown in FIG. 42, a protrusion is not provided on the tip of the upper flange 41 of the upper frame 4 and the upper flange 31 of the lower frame 41. In the present embodiment, protrusions are not provided, but the surfaces of the upper flange 41 of the upper frame 4 and the upper flange 31 of the lower frame 3 come into contact and are interposed. This can suppress upward rotation of the solar cell module 10 when there is a load caused by the blowing wind.

The embodiment shown in FIG. 42 does not have a recessed portion 67c provided in the engaging portion 67, but a recessed portion 67c may be provided.

The embodiments described above are for illustrative purposes only to not impose limitations of the present invention. The scope of the present invention is defined by the scope of the claims and not by the description of the embodiments, and includes everything equivalent in meaning to the scope of the claims and all modifications therein.

### Industrial Applicability

The present invention can be applied to solar cell modules for converting solar energy to electrical energy, photovoltaic power generators in which these solar cell modules have been installed on the roof of a building to generate power, and frames used to support these solar cell modules.

Key to the Drawings
1: Solar cell panel
3: Lower frame
31: Upper flange
34: Lower flange
34a: Protruding portion
4: Upper frame
41: Upper flange
5: Side frame
6: Cross rail
62: Frame mounting portion
66: Upper surface portion
67: Engaging portion
67a: Tapered surface
67b: Contact surface
67c: Recessed portion
7: Screw
10: Solar cell module

## Claims

1. A solar cell module installed between a pair of cross rails on which a frame mounting portion has been provided, the solar cell module comprising:
a rectangular solar cell panel,
an upper frame having an upper flange mounted on an upper side of the solar cell panel and placed on an upper surface portion of the frame mounting portion,
and
a lower frame mounted on a lower side of the solar cell panel and having upper and lower flanges extending on the side facing the ridge, the upper flange of the upper frame of the solar cell module arranged on the side facing the eaves being interposed in the mounting portion by the upper and lower flanges.

2. The solar cell module according to claim 1, wherein a space between the upper and lower flanges of the lower frame has dimensions creating a tight fit when the upper flange of the upper frame has been interposed in the mounting portion by the upper and lower flanges.

3. The solar cell module according to claim 1 or claim 2, wherein a protrusion extending towards the upper portion is formed in the tip of the upper flange of the upper frame, and a protrusion extending towards the lower portion is formed in the tip of the upper flange of the lower frame.

4. A photovoltaic power generator installed on the roof of a building comprising:
a cross rail having a frame mounting portion, and
a solar cell module including a rectangular solar cell panel, an upper frame having an upper flange, the upper frame being mounted on the upper side of the solar cell panel and placed on the upper surface portion of the frame mounting portion, and a lower frame mounted on a lower side of the solar cell panel and
having upper and lower flanges extending on the side facing the ridge;
a pair of cross rails being installed on the roof at a predetermined interval, the upper flange of the upper frame being placed on the upper surface portion of the mounted portion, and the upper flange of the upper frame being interposed and
secured in the mounted portion by the upper and lower flanges of the lower frame of the solar cell module on the side facing the ridge.

5. The photovoltaic power generator according to claim 4, wherein a space between the upper and lower flanges of the lower frame has dimensions creating a tight fit when the upper flange of the upper frame has been interposed in the mounting portion by the upper and lower flanges.

6. The photovoltaic power generator according to claim 4 or claim 5, wherein the cross rail is provided with a mounting portion connected above the main portion of a hollow structure, and the mounting portion has an upper surface portion on which the upper flange of the upper frame is placed, and an engaging portion protruding towards the ridge to engage the upper and lower flanges of the lower frame in the direction of the ridge.

7. The photovoltaic power generator according to claim 6, wherein a protrusion extending towards the upper portion is formed in the tip of the upper flange of the upper frame, a protrusion extending towards the lower portion is formed in the tip of the upper flange of the lower frame, and a protrusion extending towards the upper portion is formed in the tip of the lower flange of the lower frame.

8. The photovoltaic power generator according to claim 7, wherein the engaging portion has a tapered surface directed towards the eaves from the ridge, a contact surface contacting the lower protrusion of the lower flange of the lower frame, and a recessed portion provided between the tapered surface and the contact surface.
